(19)

**Europäisches Patentamt**
**European Patent Office**
**Office européen des brevets**

(11) **EP 4 742 279 A1**

(12) **EUROPEAN PATENT APPLICATION**
published in accordance with Art. 153(4) EPC

(43) Date of publication:
**13.05.2026 Bulletin 2026/20**

(21) Application number: **24838412.5**

(22) Date of filing: **09.05.2024**

(51) International Patent Classification (IPC):
$H01F\ 3/02^{(2006.01)}$     $H02K\ 15/12^{(2025.01)}$
$B41C\ 1/14^{(2006.01)}$     $B21D\ 28/02^{(2006.01)}$
$H02K\ 3/38^{(2006.01)}$     $H02K\ 15/02^{(2025.01)}$

(86) International application number:
**PCT/CN2024/091819**

(87) International publication number:
**WO 2025/011153 (16.01.2025 Gazette 2025/03)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.07.2023 CN 202310836009**

(71) Applicant: **Suzhou Shoulide Technology Co., Ltd.**
**Suzhou, Jiangsu 215400 (CN)**

(72) Inventor: **JIA, Jihua**
**Suzhou, Jiangsu 215400 (CN)**

(74) Representative: **Chung, Hoi Kan**
**Mandarin IP Limited**
**7 Cherry Trees**
**Great Shelford**
**Cambridge CB22 5XA (GB)**

(54) **GLUING METHOD FOR STATOR LAMINATIONS OF MOTOR, STATOR CORE, AND MESH GLUING PLATE**

(57)    Provided are a gluing method for stator laminations (1) of a motor, a stator core, and a mesh gluing plate (4). The gluing method comprises: calculating an accurate shrinkage ratio S on the basis of the mesh number of a mesh gluing plate (4) and the viscosity of glue, wherein raised edges (13), two slot side edges (14), and slot bottom edges (15) comprised in a stator lamination (1) define a closed plane, every two opposite edges on the closed plane shrink inwards according to an original shape to form a gluing area (21), and the shrinkage distance is the distance between every two opposite edges multiplied by the shrinkage ratio S. On the one hand, since the gluing area (21) is a surface area, the glue is applied to stack and bond stator laminations (1) in a full-surface gluing mode, thereby greatly improving the bonding strength of the stator core of the motor; on the other hand, since there is a shrinkage distance between the gluing area (21) and the closest edge, the glue overflowing phenomenon caused by excessive glue can be solved, thereby greatly improving the quality of driving motors of new energy vehicles.

FIG. 1

**Description**

TECHNICAL FIELD

The present application relates to the technical field of laminated adhesive application for motor stator lamination, and in particular to a gluing method for stator laminations of motors.

BACKGROUND

At present, new energy vehicles are gradually replacing traditional fuel-powered vehicles due to advantages such as environmental friendliness in charging and low operating costs. The performance level and pricing of new energy vehicles are largely determined by their drive motors. In order to improve the operating efficiency of drive motors and reduce motor noise, it is necessary to further enhance the overall quality of the motor. Among the various motor components, the stator core is a key structure affecting the overall motor quality, and the structural quality of the stator core depends on the lamination and bonding process of the stator laminations. Only by further improving the lamination bonding process can a quieter and more comfortable driving experience for new energy vehicles be achieved.

In the prior art, during the bonding and processing of stator cores, due to the complex shapes of stator laminations in drive motors for new energy vehicles and the narrow bonding surface areas between adjacent laminations, dispensing is predominantly adopted in practical bonding processes to laminate and bond stator laminations or rotor laminations. However, compared with full-surface adhesive application, such dispensing applies a relatively small amount of adhesive, resulting in insufficient bonding strength of the laminated stator core, thereby adversely affecting the overall quality of the motor.

To address the issue that an insufficient amount of adhesive affects the overall strength of the motor, those skilled in the art have considered bonding stator laminations by applying adhesive in a full-surface manner. Although this approach can improve bonding strength by increasing the amount of adhesive, in practice it is difficult to accurately match an appropriate adhesive amount to the bonding regions. Moreover, it is also difficult to precisely control the adhesive-coated area and the coating position during application. Simply increasing the adhesive amount tends to cause adhesive overflow during laminating the stator lamination, which in turn adversely affects the quality of the motor.

Similarly, existing adhesive applying methods for motor rotor laminations suffer from the same problems as those for stator laminations, namely, insufficient bonding strength caused by an inadequate amount of adhesive on the one hand, and adhesive overflow resulting from an excessive amount of adhesive on the other hand.

SUMMARY

A first objective of the present application is to provide an gluing method for stator laminations of motors, which can not only address the technical problem of insufficient bonding reliability of a stator core caused by an inadequate amount of adhesive, but also eliminate adhesive overflow resulting from an excessive amount of adhesive. By enabling precise adhesive application on stator laminations, the method significantly improves the quality of drive motors for new energy vehicles.

A second objective of the present application is to provide a stator core for a motor, which is prepared by laminating and bonding stator laminations using the above adhesive-applying method. The stator core thus obtained has high bonding strength without adhesive overflow, thereby exhibiting high product quality.

A third objective of the present application is to provide a mesh-type adhesive coating plate for applying adhesive to motor stator lamination, as well as a preparation method thereof. The mesh-type adhesive coating plate is provided with blocked regions and adhesive-permeable regions, and can be used in cooperation with the above adhesive-applying method to facilitate precise adhesive application on stator laminations.

To achieve the above objectives, the present application provides the following technical solutions.

In a first aspect, the present application provides an adhesive-applying method for motor stator lamination, comprising the following steps:

S1: drawing, according to a shape of a stator lamination to be applied with adhesive, an adhesive application region capable of being applied with adhesive.

wherein, in step S1, the adhesive application region is arranged on a closed plane of the stator lamination to be applied with adhesive, the closed plane being composed of a yoke portion and a tooth portion, the tooth portion comprising a plurality of tooth units, each tooth unit being composed of a protruding edge, opposing tooth-slot side edges, and a tooth-slot bottom edge; a distance from an outer edge of the yoke portion to the protruding edge located on a same radius is defined as a yoke distance D, a distance between two points of the opposing tooth-slot side edges on a same circumferential line is defined as a tooth distance d, and a distance from the tooth-slot bottom edge to the outer edge of the yoke portion on the same radius is defined as a tooth-slot distance h; the outer edge of the yoke portion and the protruding edge are synchronously shrunk toward an inner closed plane of the yoke portion according to original shapes of the outer edge of the yoke portion and the protruding edge, respectively, to form adhesive application region of the yoke portion, wherein a yoke shrinkage distance by which the outer edge of the yoke portion and the protruding edge are shrunk toward the yoke portion is $\Delta D$, and $\Delta D$ = the yoke distance D * a shrinkage ratio S, ; adjacent edges of the opposing tooth-slot side edges and the tooth-slot bottom edge are synchronously shrunk toward a closed plane within the tooth unit according to original shapes of the respective edges to form an adhesive application region of tooth portion, wherein a shrinkage distance by which the opposing tooth-slot side edges are shrunk toward the adhesive application region of the tooth portion is $\Delta d$, and $\Delta d$ = tooth distance d * the shrinkage ratio S, , and a shrinkage distance by which the tooth-slot bottom edge is shrunk toward the adhesive application region of the tooth portion is $\Delta h$, and $\Delta h$ = the tooth-slot distance h * the shrinkage ratio S, ; the adhesive application region of the yoke portion and the adhesive application region of the tooth portion together constitute the adhesive application region on the stator lamination capable of receiving adhesive; and on the closed plane of the stator lamination, regions other than the adhesive application region are non-adhesive application regions.

S2: preparing a photosensitive film having dimensions corresponding to those of the stator lamination in step S1;

S3: preparing a mesh base having dimensions corresponding to those of the stator lamination in step S1;

S4: preparing a mesh gluing plate corresponding to the adhesive application region in step S1;

In step S4, the preparation of the mesh gluing plate comprises: first applying, onto the mesh base, a liquid material capable of being cured under light irradiation or thermal radiation; then covering the liquid material with the photosensitive film, and curing the liquid material by photosensing, exposure, or thermal radiation; cured liquid material blocking corresponding meshes of the mesh base to form adhesive-blocking regions that are incapable of allowing adhesive to pass therethrough, the adhesive-blocking regions corresponding to the non-adhesive application regions on the stator lamination; and finally removing uncured liquid material from the mesh base such that unblocked meshes form adhesive-permeable regions capable of allowing adhesive to pass therethrough, the adhesive-permeable regions corresponding to the adhesive application regions on the stator lamination, whereby the mesh gluing plate is formed after the adhesive-permeable regions and the adhesive-blocking regions are produced on the mesh base.

S5: placing the mesh gluing plate prepared in step S4 over the stator lamination to be applied with adhesive in step S1, and applying adhesive to the adhesive application region manually or by means of an adhesive applying machine.

In a second aspect, the present application provides a stator core for motor, wherein the stator core is prepared by laminating and bonding stator laminations using the above-described gluing method for stator lamination.

In a third aspect, the present application provides a mesh gluing plate for applying adhesive to motor stator lamination. The mesh gluing plate comprises adhesive-blocking regions and adhesive-permeable regions. The adhesive-blocking regions are formed by applying a liquid material and blocking meshes under light curing or thermal curing, and shapes of the adhesive-blocking regions correspond to non-adhesive application regions of the stator lamination, while shapes of the adhesive-permeable regions correspond to adhesive application regions of the stator lamination.

In a fourth aspect, the present application provides a method for preparing a mesh gluing plate for applying adhesive to motor stator lamination, comprising:

applying, onto a mesh base, a liquid material capable of being cured under light irradiation or thermal radiation;

covering the liquid material with a photosensitive film having dimensions corresponding to those of the stator lamination, such that after curing, the liquid material blocks corresponding meshes of the mesh base to form adhesive-blocking regions that are incapable of allowing adhesive to pass therethrough, wherein the shapes of the adhesive-blocking regions correspond to non-adhesive application regions on the stator lamination; and

removing uncured liquid material from the mesh base, such that unblocked meshes form adhesive-permeable regions capable of allowing adhesive to pass therethrough, wherein shapes of the adhesive-permeable regions correspond to adhesive application regions on the stator lamination.

Compared with the prior art, the beneficial effects of the present application include, for example, the following: The present application discloses an gluing method for stator laminations of motors. In the method, a precise shrinkage ratio S of the adhesive after full-surface adhesive application is first calculated based on a selected mesh count of a mesh base and a viscosity of the adhesive, and an adhesive application region is then accurately determined according to the shape of the stator lamination.

Specifically, for a closed plane enclosed by edges of the stator lamination, shrinkage distances are precisely calculated according to the shrinkage ratio and distances between each pair of opposing edges. Each edge is synchronously shrunk inward toward the closed plane by a corresponding shrinkage distance in accordance with its original shape, thereby forming a shrunk plane having an area smaller than that of the original closed plane. The shrunk plane constitutes the adhesive application region precisely determined by the present application, and both the shape and the size of the adhesive application region are accurately calculated, thereby ensuring accurate control of both the amount and the position of adhesive applied on the stator lamination.

On the one hand, the gluing method of the present application realizes full-surface adhesive application on the stator laminations, and by applying adhesive in a full-surface manner, the bonding strength of a motor stator core formed by laminating and bonding the stator laminations is significantly improved. On the other hand, since the adhesive application region is spaced from the nearest edges by respective shrinkage distances, the problem of adhesive overflow caused by an excessive amount of adhesive is effectively resolved.

By means of the gluing method of the present application, a stator core obtained therefrom has sufficient bonding strength during lamination and bonding of the stator laminations and does not generate adhesive overflow, thereby greatly improving the strength and quality of the stator core and further enhancing the quality of drive motors for new energy vehicles.

Meanwhile, the mesh gluing plate provided by the present application is mainly used in the gluing method for stator laminations of motors. The adhesive-blocking regions and adhesive-permeable regions of the mesh gluing plate are customized according to the adhesive application regions on the stator laminations, thereby enabling precise adhesive application on the stator laminations. For stator laminations of the same specification and size, mass production of such mesh gluing plates can greatly reduce the difficulty of applying the adhesive applying method and is conducive to achieving high-efficiency and high-quality adhesive application.

BRIEF DESCRIPTION OF DRAWINGS

The drawings required for describing the embodiments are briefly introduced below:

FIG. 1 is a schematic diagram of a stator lamination according to the present application;

FIG. 2 is a schematic diagram illustrating a stator lamination shrunk by 17% in an gluing method for stator laminations of motors according to Embodiment 1 of the present application;

FIG. 3 is a schematic diagram of a photosensitive film prepared based on FIG. 2 according to Embodiment 1 of the present application;

FIG. 4 is a schematic diagram of a mesh gluing plate prepared based on FIG. 3 according to Embodiment 1 of the present application;

FIG. 5 is a schematic diagram illustrating a stator lamination shrunk by 20.6% in an gluing method for stator laminations of motors according to Embodiment 2 of the present application;

FIG. 6 is a schematic diagram illustrating a stator lamination shrunk by 24.96% in an gluing method for stator laminations of motors according to Embodiment 3 of the present application;

FIG. 7 is a schematic diagram illustrating a stator lamination shrunk by 24% in an gluing method for stator laminations of motors according to Embodiment 4 of the present application;

FIG. 8 is a schematic diagram illustrating a stator lamination shrunk by 24.8% in an gluing method for stator laminations of motors according to Embodiment 5 of the present application;

FIG. 9 is a schematic diagram illustrating a stator lamination shrunk by 39.99% in an gluing method for stator laminations of motors according to Embodiment 6 of the present application;

FIG. 10 is a schematic diagram illustrating a stator lamination shrunk by 20% in an gluing method for stator laminations of motors according to Embodiment 7 of the present application;

FIG. 11 is a schematic diagram illustrating a stator lamination shrunk by 22.5% in an gluing method for stator laminations of motors according to Embodiment 8 of the present application;

FIG. 12 is a schematic diagram illustrating a stator lamination shrunk by 24.975% in an gluing method for stator laminations of motors according to Embodiment 9 of the present application.

Reference Numerals:

1-Stator Lamination; 11-Yoke Portion; 12-Tooth Portion; 13-Protruding Edge; 14-Opposing Tooth-Slot Side Edges; 15-Tooth-Slot Bottom Edge; 21-Adhesive Application Region; 22-Non-Adhesive Application Region; 3-Photosensitive Film; 4-Mesh Gluing Plate; 301-Completely Light-Impermeable Or Heat-Impermeable Region; 302-Completely Light-Permeable Or Heat-Permeable Region; 401-Adhesive-Blocking Region; 402-Adhesive-Permeable Region.

DETAILED DESCRIPTION OF THE EMBODIMENTS

The technical solutions of the embodiments of the present application will be clearly and completely described below with reference to the accompanying drawings of the embodiments of the present application. Obviously, the described embodiments are only some, rather than all, of the embodiments of the present application. All other embodiments obtained by those skilled in the art on the basis of the embodiments of the present application without creative effort shall fall within the protection scope of the present application.

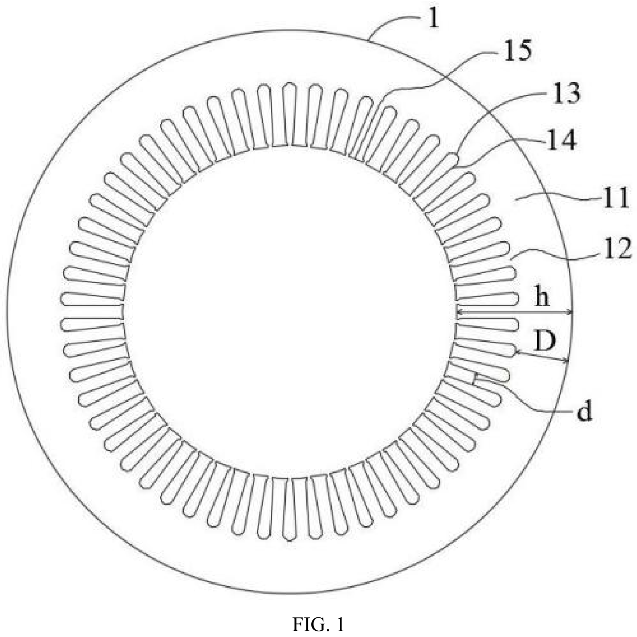

Referring to FIGS. 1 to 4, an embodiment of the present application provides a gluing method for stator lamination 1 of motor, comprising the following steps:

S1: drawing, according to the shape of a stator lamination 1 to be applied with adhesive, an adhesive application region 21 capable of receiving adhesive.

Before drawing the adhesive application region, the method further comprises calculating a shrinkage ratio S of the adhesive based on a viscosity of selected adhesive and a mesh count of the mesh base, wherein the shrinkage ratio S is proportional to the mesh count of the mesh base and the viscosity of the adhesive. A specific calculation formula for the shrinkage ratio S is obtained by the inventor through long-term experimental research and summary. Specifically, the stator lamination 1 comprises a plurality of edges, and the edges can enclose at least one closed plane. The edges on the closed plane are shrunk inward by respective shrinkage distances to form an inner closed region, and the inner closed region is the adhesive application region 21 that can be precisely drawn. On the one hand, since the adhesive application region 21 is an area region, adhesive is applied in a full-surface manner to laminate and bond the stator laminations, thereby significantly improving the bonding strength of a motor stator core. On the other hand, since the adhesive application region 21 is spaced from the nearest adjacent edges by respective shrinkage distances, adhesive overflow caused by an excessive amount of adhesive can be avoided, thereby greatly improving the quality of drive motors for new energy vehicles.

The calculation of the shrinkage ratio is divided into the following two cases according to a value obtained by multiplying the mesh count of the mesh base by the viscosity of the adhesive:

(1) When the product of the mesh count of the selected mesh base and the viscosity of the adhesive is greater than 160,000, the shrinkage ratio S is calculated as follows:

$$\text{shrinkage ratio S} = [100 - \frac{\text{mesh count of the selected mesh base}}{500} \times \frac{\text{adhesive viscosity}}{10000}] \div 4 \times 1\%$$

.

(2) When the product of the mesh count of the selected mesh base and the viscosity of the adhesive is less than or equal to 160,000, the shrinkage ratio S is calculated as follows:

$$\text{shrinkage ratio} S = [100 - \frac{\text{mesh count of the selected mesh base}}{500} \times \frac{\text{adhesive viscosity}}{10000}]$$

$$\div [\frac{\text{adhesive viscosity} \times \text{mesh count of the selected mesh base}}{40000}] \times 1\%$$

In step S1, the adhesive application region 21 is arranged on a closed plane of a stator lamination 1 to be applied with adhesive. The closed plane is composed of a yoke portion 11 and a tooth portion 12, wherein the tooth portion 12 comprises a plurality of tooth units. Each tooth unit is formed by a protruding edge 13, opposing tooth-slot side edges 14, and a tooth-slot bottom edge 15. A distance from an outer edge of the yoke portion 11 to the protruding edge 13 located on the same radius is a yoke distance D; a distance between two points of the opposing tooth-slot side edges 14 on the same circumferential line is a tooth distance d; and a distance between the tooth-slot bottom edge 15 and the outer edge of the yoke portion 11 on the same radius is a tooth-slot distance h.

The outer edge of the yoke portion 11 and the protruding edge 13 are synchronously shrunk toward an inner closed plane of the yoke portion 11 in accordance with an original shape of the outer edge of the yoke portion 11 and an original shape of the protruding edge 13, respectively, so as to form an adhesive application region 21 of yoke portion 11. A yoke portion 11 shrinkage distance by which the outer edge of the yoke portion 11 and the protruding edge 13 are shrunk toward the yoke portion 11 is denoted as ΔD, wherein ΔD = the yoke distance D * the shrinkage ratio S,. Adjacent edges of the opposing tooth-slot side edges 14 and the tooth-slot bottom edge 15 are synchronously shrunk toward a closed plane within the tooth unit in accordance with original shapes of the respective edges so as to form an adhesive application region 21 of the tooth portion 12. A shrinkage distance by which the opposing tooth-slot side edges 14 are shrunk toward the adhesive application region 21 of the tooth portion 12 is denoted as Δd, wherein Δd = the tooth distance d * the shrinkage ratio S, ; and a shrinkage distance by which the tooth-slot bottom edge 15 is shrunk toward the adhesive application region 21 of the tooth portion 12 is denoted as Δh, wherein Δh = the tooth-slot distance h * the shrinkage ratio S, .

The adhesive application region 21 of the yoke portion 11 and the adhesive application region 21 of the tooth portion 12 together constitute the adhesive application region 21 on the stator lamination 1 that is capable of receiving adhesive. Regions on the closed plane of the stator lamination other than the adhesive application region 21 are non-adhesive application regions 22. Namely the closed plane of the stator lamination comprises the adhesive application region 21 and the non-adhesive application regions 22.

More specifically, the mesh count of the mesh base ranges from 100 meshes to 20,000 meshes, preferably from 200 meshes to 18,000 meshes, and more preferably from 500 meshes to 15,000 meshes, for example, 1,000 meshes, 2,000 meshes, 4,000 meshes, 6,000 meshes, 8,000 meshes, 10,000 meshes, 12,000 meshes, or 14,000 meshes.

More specifically, the viscosity of the adhesive ranges from 1,000 cps to 8,000 cps, preferably from 1,500 cps to 7,500 cps, and more preferably from 2,000 cps to 6,000 cps, for example, 2,500 cps, 3,000 cps, 4,500 cps, 5,000 cps, or 5,500 cps.

S2: preparing a photosensitive film having dimensions corresponding to those of the stator lamination 1 in step S1.

More specifically, light-permeable and heat-permeable regions and mask regions are formed on a substrate of the photosensitive film, wherein shapes of the light-permeable and heat-permeable regions correspond to the non-adhesive application regions drawn in step S1, and shapes of the mask regions correspond to the adhesive application regions drawn in step S1.

Preferably, the photosensitive film is made of any one of PC, PP, PE, and PVC.

S3: preparing a mesh base having dimensions corresponding to those of the stator lamination 1 in step S1, wherein the mesh base is made of one of a nylon mesh, a fiber mesh, or a nano mesh.

Preferably, the mesh base is made of any one of a nylon mesh, a fiber mesh, and a nano mesh, and the shape of the mesh base corresponds to that of the stator lamination.

S4: preparing a mesh gluing plate corresponding to the adhesive application region 21 in step S1.

Preferably, after curing the liquid material, the mesh gluing plate forms adhesive-blocking regions and adhesive-permeable regions, wherein shapes of the adhesive-blocking regions correspond to the non-adhesive application regions drawn in step S1, and shapes of the adhesive-permeable regions correspond to the adhesive application regions drawn in step S1.

The mesh gluing plate is prepared as follows:
First, a liquid material capable of being cured under light irradiation or thermal radiation is applied onto the mesh base. Then, the photosensitive film is overlaid on the liquid material, and the liquid material is cured by photosensing, exposure, or thermal radiation. The cured liquid material blocks corresponding meshes of the mesh base, and the blocked meshes form adhesive-blocking regions 401 that are incapable of allowing adhesive to pass therethrough, wherein the adhesive-blocking regions 401 correspond to the non-adhesive application regions 22 on the stator lamination. Finally, uncured liquid material on the mesh base is removed and allowed to leak out through corresponding meshes of the mesh base, and the unblocked meshes form adhesive-permeable regions 402 that allow adhesive to pass therethrough, wherein the adhesive-permeable regions 402 correspond to the adhesive application regions 21 on the stator lamination. After the adhesive-permeable regions 402 and the adhesive-blocking regions 401 are formed on the mesh base, the mesh gluing plate is obtained. At this time, the liquid material is a photosensitive adhesive or a hot-melt adhesive.

The mesh gluing plate comprises adhesive-blocking regions and adhesive-permeable regions. The adhesive-blocking regions are formed by applying the liquid material and blocking meshes under light curing or thermal curing, and shapes of the adhesive-blocking regions correspond to the non-adhesive application regions of the stator lamination, while shapes of the adhesive-permeable regions correspond to the adhesive application regions of the stator lamination.

S5: placing the mesh gluing plate obtained in step S4 over the stator lamination 1 to be applied with adhesive in step S1, and applying adhesive in the adhesive application region 21 manually or by an adhesive applying machine.

Embodiment 1:

Referring to FIGS. 1 to 4, for better illustration of the present application, a stator lamination 1 of a motor having an outer diameter of 210 mm, an inner diameter of 130 mm, and 54 teeth is taken as an example. The mesh base is made of one of a nylon mesh, a fiber mesh, or a nano mesh, and the viscosity of the adhesive is 8,000 cps. In order to increase the adhesive application region 21 and the amount of adhesive as much as possible without causing adhesive overflow, so as to improve the bonding strength of the product, the method is as follows:
First, according to the shape of the stator lamination 1 (wherein the shape refers to a contour line), the adhesive application region 21 is accurately drawn. In this embodiment, the shape mainly includes two portions: one is a yoke portion 11 formed by an annular structure, and the other is a tooth portion 12 formed by 54 identical tooth units, each tooth unit being composed of a protruding edge 13, opposing tooth-slot side edges 14, and a tooth-slot bottom edge 15.

When the mesh count of the selected mesh base is 20,000, the product of the mesh count of the mesh base and the viscosity of the adhesive is 20,000 * 8,000 = 160,000,000, which is greater than 160,000. Accordingly, the shrinkage ratio S is calculated as S = ((100 - (mesh count of the mesh base / 500 * adhesive viscosity / 10,000)) / 4)% = ((100 - 20,000 / 500 * 8,000 / 10,000) / 4)% = 17%.

In this embodiment, a distance by which an outer edge of the yoke portion 11 is shrunk inward is $\Delta D$ = the yoke distance D * 17%, and the protruding edge 13 is likewise shrunk by $\Delta D$ toward the outer edge of the yoke portion 11, wherein a contour line of the shrunk protruding edge has the same shape as that of the original protruding edge. The opposing tooth-slot side edges 14 are respectively shrunk inward by a distance $\Delta d$ = the tooth distance d * the shrinkage ratio S, and the tooth-slot bottom edge 15 is shrunk toward the outer edge of the yoke portion 11 by a distance $\Delta h$ = the tooth-slot distance h * the shrinkage ratio S.

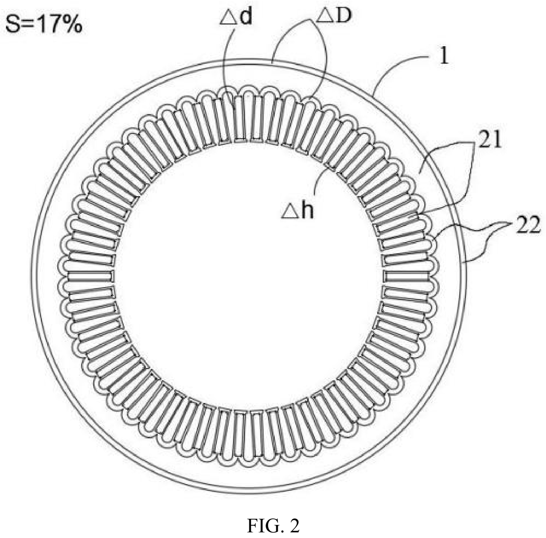

The edge of the yoke portion 11 and the protruding edge 13 are synchronously shrunk toward an inner closed plane of the yoke portion 11 in accordance with their original shapes to form an adhesive application region of the yoke portion, and adjacent edges of the opposing tooth-slot side edges 14 and the tooth-slot bottom edge 15 are synchronously shrunk toward a closed plane within each tooth unit in accordance with their original shapes to form an adhesive application region of tooth portion. The adhesive application region of the yoke portion and the adhesive application region 21 of the tooth portion together constitute the adhesive application region 21 on the stator lamination 1 capable of receiving adhesive in this embodiment, as shown in FIG. 2.

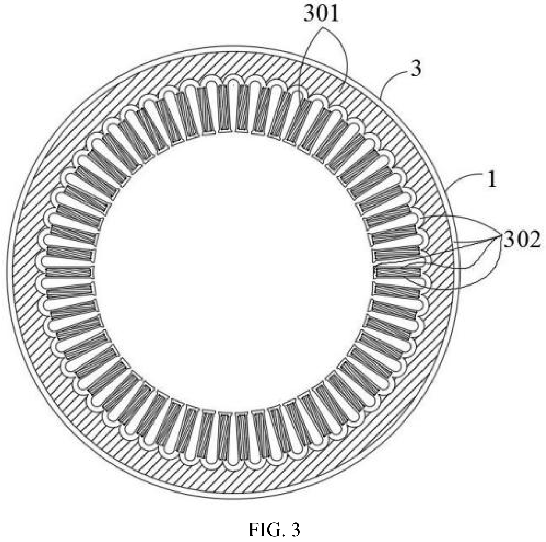

Next, based on the adhesive application region 21 precisely drawn in FIG. 2, a photosensitive film 3 is prepared. Specifically, the photosensitive film 3 is similar to a conventional photographic film and is made of PC, PP, PET, or PVC, and the photosensitive film 3 is capable of blocking light or heat. As shown in FIG. 3, regions indicated with shading on the photosensitive film 3 are completely light-impermeable or heat-impermeable regions, referred to as completely light-impermeable or heat-impermeable regions 301 (i.e., mask regions), and the completely light-impermeable or heat-impermeable regions 301 correspond to the adhesive application region 21 in FIG. 2. Regions without shading on the photosensitive film 3 are completely light-permeable or heat-permeable regions (i.e., light-permeable and heat-permeable regions), referred to as completely light-permeable or heat-permeable regions 302, and the completely light-permeable or heat-permeable regions 302 correspond to the non-adhesive application region 22 in FIG. 2.

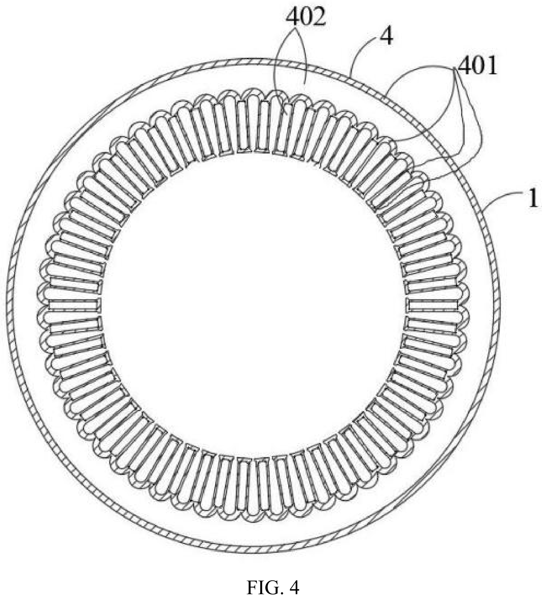

Next, preparation of the mesh gluing plate 4 is carried out. Specifically, a liquid material capable of being cured under light irradiation or thermal radiation is applied onto a nano mesh having a mesh count of 20,000. The photosensitive film prepared as shown in FIG. 3 is then overlaid on the liquid material, and the liquid material is cured by photosensing, exposure, or thermal radiation. The cured liquid material blocks corresponding meshes of the nano mesh, and the blocked meshes form adhesive-blocking regions 401 shown with shading in FIG. 4, wherein the adhesive-blocking regions 401 correspond to the non-adhesive application regions 22 in FIG. 2. Thereafter, uncured liquid material on the nano mesh is removed, and the liquid material leaks out through corresponding meshes of the nano mesh, such that unblocked meshes form adhesive-permeable regions 402 shown without shading in FIG. 4, wherein the adhesive-permeable regions 402 correspond to the adhesive application regions 21 in FIG. 2. After the adhesive-blocking regions 401 and the adhesive-permeable regions 402 are formed on the nano mesh, the mesh gluing plate 4 is obtained. In specific implementations, the liquid material is a photosensitive adhesive or a hot-melt adhesive.

Finally, the prepared mesh gluing plate 4 is placed over the stator lamination 1 to be applied with adhesive, and adhesive is applied to the adhesive application region 21 of the stator lamination 1 manually or by means of an adhesive applying machine. As a result, a specified amount of adhesive is precisely applied to designated regions of the stator lamination 1 of a motor, thereby strictly controlling the amount of adhesive used and effectively avoiding adhesive overflow caused by excessive adhesive, which in turn significantly improves the quality of drive motors for new energy vehicles.

Embodiment 2:

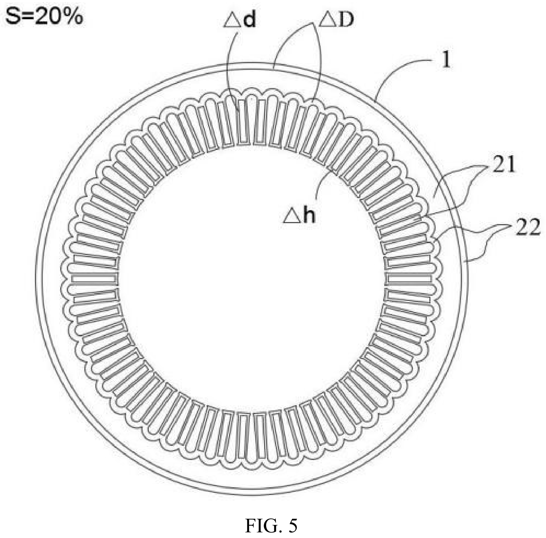

Referring to FIG. 5, Embodiment 2 differs from Embodiment 1 in that the mesh count of the mesh base is 11,000. When the mesh count of the mesh base is 11,000, the product of the mesh count of the mesh base and the viscosity of the adhesive is 11,000 * 8,000 = 88,000,000, which is greater than 160,000. Accordingly, the shrinkage ratio S is calculated as S = ((100 - (mesh count of the mesh base / 500 * adhesive viscosity / 10,000)) / 4)% = ((100 - 11,000 / 500 * 8,000 / 10,000) / 4)% = 20.6%.

In this embodiment, all edges are shrunk according to a shrinkage ratio of 20.6%, thereby accurately drawing an adhesive application region of the stator lamination as shown in FIG. 5. Based on the drawn adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.

Embodiment 3:

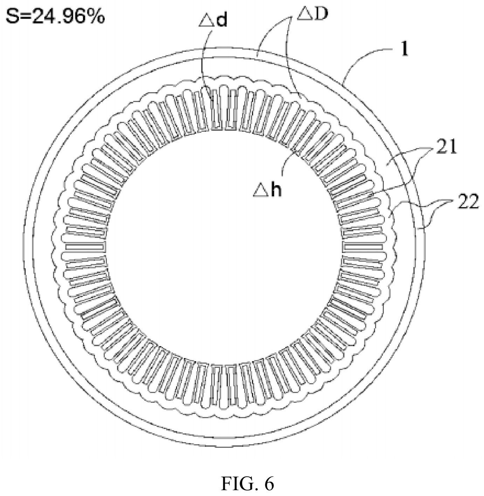

Referring to FIG. 6, Embodiment 3 differs from Embodiment 1 in that the mesh count of the mesh base is 100. When the mesh count of the selected mesh base is 100, the product of the mesh count of the mesh base and the viscosity of the adhesive is 100 * 8,000 = 800,000, which is greater than 160,000. Accordingly, the shrinkage ratio S is calculated as S = ((100 - (mesh count of the mesh base / 500 * adhesive viscosity / 10,000)) / 4)% = ((100 - 100 / 500 * 8,000 / 10,000) / 4)% = 24.96%.
In this embodiment, all edges are shrunk according to a shrinkage ratio of 24.96%, thereby accurately drawing an adhesive application region of the stator lamination as shown in FIG. 6. Based on the drawn adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.

Embodiment 4:

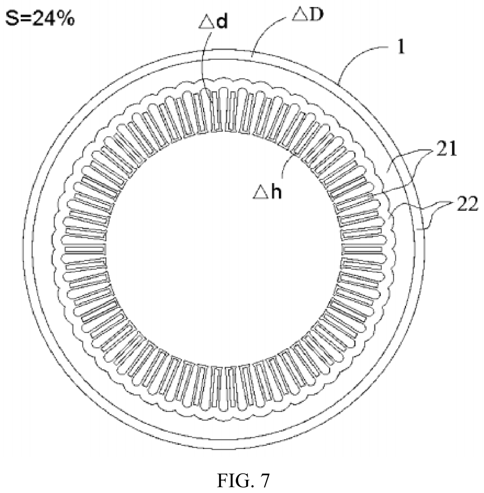

Referring to FIG. 7, Embodiment 4 differs from Embodiment 1 in that the viscosity of the adhesive is 1,000 cps. When the mesh count of the mesh base is 20,000, the product of the mesh count of the mesh base and the viscosity of the adhesive is 20,000 * 1,000 = 20,000,000, which is greater than 160,000. Accordingly, the shrinkage ratio S is calculated as S = ((100 - (mesh count of the mesh base / 500 * adhesive viscosity / 10,000)) / 4)% = ((100 - 20,000 / 500 * 1,000 / 10,000) / 4)% = 24%.
In this embodiment, all edges are shrunk according to a shrinkage ratio of 24%, thereby accurately drawing an adhesive application region of the stator lamination as shown in FIG. 7. Based on the drawn adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.

Embodiment 5:

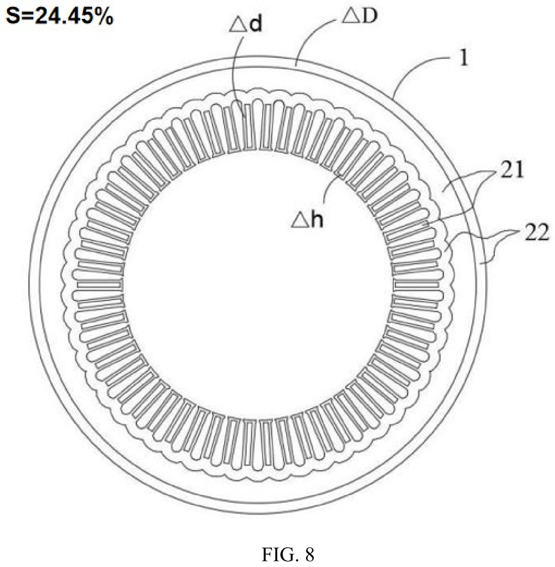

Referring to FIG. 8, Embodiment 5 differs from Embodiment 1 in that the viscosity of the adhesive is 1,000 cps. When the mesh count of the mesh base is 11,000, the product of the mesh count of the mesh base and the viscosity of the adhesive is 11,000 * 1,000 = 11,000,000, which is greater than 160,000. Accordingly, the shrinkage ratio S is calculated as S = ((100 - (mesh count of the mesh base / 500 * adhesive viscosity / 10,000)) / 4)% = ((100 - 11,000 / 500 * 1,000 / 10,000) / 4)% = 24.45%.
In this embodiment, all edges are shrunk according to a shrinkage ratio of 24.45%, thereby accurately drawing an adhesive application region of the stator lamination as shown in FIG. 8. Based on the drawn adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.
In Embodiments 1 to 5 described above, different shrinkage ratios are achieved by matching different mesh counts of the mesh base with different adhesive viscosities, such that edges on a closed plane can be shrunk inward by corresponding shrinkage distances to obtain an inner closed region. The inner closed region is the adhesive application region 21 that can be precisely drawn.
With respect to the adhesive applying method for stator lamination disclosed in the above embodiments, those skilled in the art can readily apply the method to laminated adhesive application of motor rotor laminations as long as corresponding distances between respective edges can be determined. No additional technical difficulties need to be overcome.

Embodiment 6:

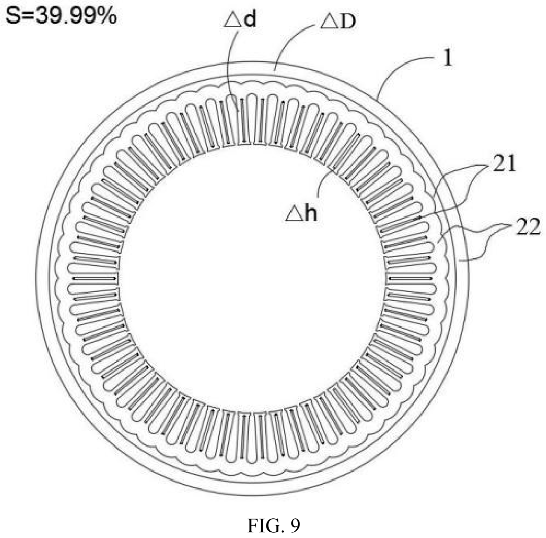

Referring to FIG. 9, Embodiment 6 differs from Embodiment 1 in that the viscosity of the adhesive is 1,000 cps. When the mesh count of the mesh base is 100, the product of the mesh count of the mesh base and the viscosity of the adhesive is 100 * 1,000 = 100,000, which is less than 160,000. Accordingly, the shrinkage ratio S is calculated as S = ((100 - (mesh count of the mesh base / 500 * adhesive viscosity / 10,000)) / (adhesive viscosity * mesh count / 40,000))% = ((100 - 100/500 * 1,000 / 10,000) / (1,000 * 100 / 40,000))% = 39.99%.
In this embodiment, all edges are shrunk according to a shrinkage ratio of 39.99%, thereby accurately defining an adhesive application region of the stator lamination, as shown in FIG. 9. Based on the defined adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.

Embodiment 7:

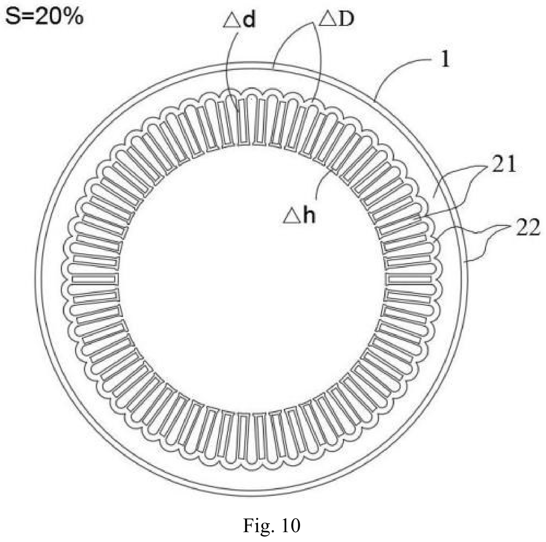

Referring to FIG. 10, Embodiment 7 differs from Embodiment 1 in that the viscosity of the adhesive is 5,000 cps. When the mesh count of the mesh base is 20,000, the product of the mesh count of the mesh base and the viscosity of the adhesive is 20,000 * 5,000 = 100,000,000, which is greater than 160,000. Accordingly, the shrinkage ratio S is calculated as S = ((100 - (mesh count of the mesh base / 500 * adhesive viscosity / 10,000)) / 4)% = ((100 - 20,000 / 500 * 5,000 / 10,000) / 4)% = 20%.

In this embodiment, all edges are shrunk according to a shrinkage ratio of 20%, thereby accurately drawing an adhesive application region of the stator lamination as shown in FIG. 10. Based on the drawn adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.

Embodiment 8:

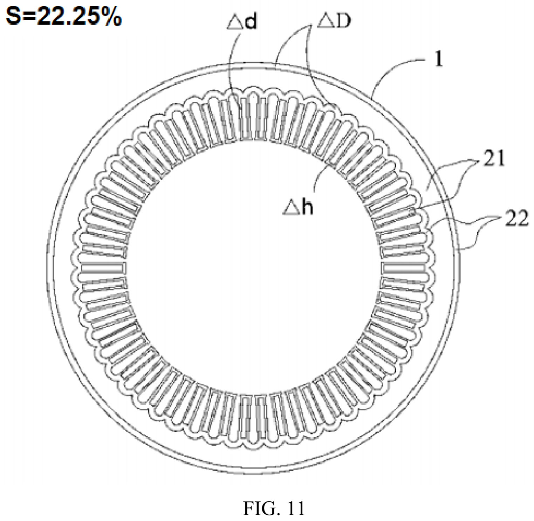

Referring to FIG. 11, Embodiment 8 differs from Embodiment 1 in that the viscosity of the adhesive is 5,000 cps. When the mesh count of the mesh base is 11,000, the product of the mesh count of the mesh base and the viscosity of the adhesive is 11,000 * 5,000 = 55,000,000, which is greater than 160,000. Accordingly, the shrinkage ratio S is calculated as S = ((100 - (mesh count of the mesh base / 500 * adhesive viscosity / 10,000)) / 4)% = ((100 - 11,000 / 500 * 5,000 / 10,000) / 4)% = 22.25%.

In this embodiment, all edges are shrunk according to a shrinkage ratio of 22.25%, thereby accurately drawing an adhesive application region of the stator lamination as shown in FIG. 11. Based on the drawn adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.

Embodiment 9:

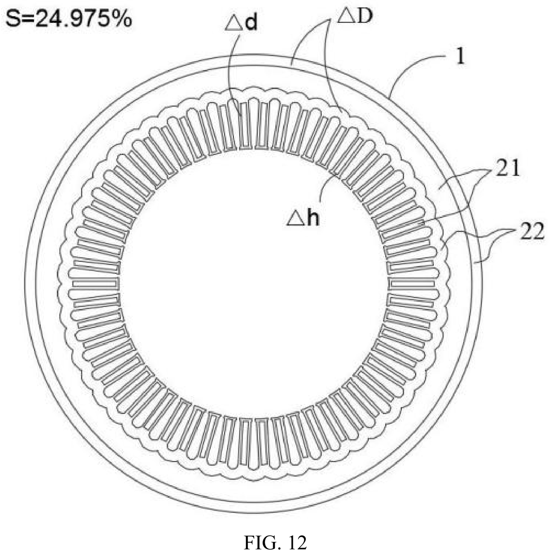

Referring to FIG. 12, Embodiment 9 differs from Embodiment 1 in that the viscosity of the adhesive is 5,000 cps. When the mesh count of the mesh base is 100, the product of the mesh count of the mesh base and the viscosity of the adhesive is 100 * 5,000 = 500,000, which is greater than 160,000. Accordingly, the shrinkage ratio S is calculated as S = ((100 - (mesh count of the mesh base / 500 * adhesive viscosity / 10,000)) / 4)% = ((100 - 100 / 500 * 5,000 / 10,000) / 4)% = 24.975%.

In this embodiment, all edges are shrunk according to a shrinkage ratio of 24.975%, thereby accurately drawing an adhesive application region of the stator lamination as shown in FIG. 12. Based on the drawn adhesive application region 21, a corresponding photosensitive film and an adhesive application plate are prepared. The adhesive application plate is then placed over the stator lamination 1 of a motor, and an appropriate amount of adhesive is applied to the adhesive application region manually or by an adhesive applying machine, thereby completing precise adhesive application on the stator lamination of the motor.

In Embodiments 6 to 9 described above, the descriptions of the respective embodiments emphasize different aspects. For matters not described in detail in these embodiments, reference may be made to the corresponding description in Embodiment 1. The above four embodiments are all directed to adhesive application for the stator lamination 1 of the motor. Similarly, adhesive application for motor rotor laminations may also be performed in a similar manner.

In the description of the present application, the terms "first" and "second" are used merely for descriptive purposes and shall not be construed as indicating or implying relative importance or as implicitly specifying the number of the indicated technical features. Accordingly, features defined with the terms "first" and "second" may explicitly or implicitly include one or more such features.

Specific examples are used herein to illustrate the principles and implementation modes of the present application, and the descriptions of the above embodiments are only intended to assist in understanding the method of the present application and its core concept. Meanwhile, those skilled in the art may make various modifications in specific implementations and application scopes based on the concept of the present application. Therefore, the contents of this specification shall not be construed as limiting the present application.

**Claims**

1. A gluing method for stator laminations of motors, wherein the method comprises following steps:

   S1: drawing, according to a shape of a stator lamination to be applied with adhesive, an adhesive application region capable of receiving adhesive;

   S2: preparing a photosensitive film having dimensions corresponding to those of the stator lamination in step S1;

   S3: preparing a mesh base having dimensions corresponding to those of the stator lamination in step S1;

   S4: preparing a mesh gluing plate corresponding to the adhesive application region in step S1;

   S5: placing the mesh gluing plate prepared in step S4 over the stator lamination to be applied with adhesive in step S1, and applying adhesive to the adhesive application region manually or by means of an adhesive applying machine;

   wherein, in step S1, the adhesive application region is arranged on a closed plane of the stator lamination to be applied with adhesive, the closed plane being composed of a yoke portion and a tooth portion, the tooth portion comprising a plurality of tooth units, each tooth unit being composed of a protruding edge, opposing tooth-slot side edges, and a tooth-slot bottom edge; a distance from an outer edge of the yoke portion to the protruding edge located on a same radius is defined as a yoke distance D, a distance between two points of the opposing tooth-slot side edges on a same circumferential line is defined as a tooth distance d, and a distance from the tooth-slot bottom edge to the outer edge of the yoke portion on the same radius is defined as a tooth-slot distance h; the outer edge of the yoke portion and the protruding edge are synchronously shrunk toward an inner closed plane of the yoke portion according to original shapes of the outer edge of the yoke portion and the protruding edge, respectively, to form an adhesive application region of the yoke portion, wherein a yoke shrinkage distance by which the outer edge of the yoke portion and the protruding edge are shrunk toward the yoke portion is $\Delta D$, and $\Delta D$ = the yoke distance D * a shrinkage ratio S, ; adjacent edges of the opposing tooth-slot side edges and the tooth-slot bottom edge are synchronously shrunk toward a closed plane within the tooth unit according to original shapes of the respective edges to form an adhesive application region of the tooth portion, wherein a shrinkage distance by which the opposing tooth-slot side edges are shrunk toward the adhesive application region of the tooth portion is $\Delta d$, and $\Delta d$ = tooth distance d * the shrinkage ratio S, , and a shrinkage distance by which the tooth-slot bottom edge is shrunk toward the adhesive application region of the tooth portion is $\Delta h$, and $\Delta h$ = the tooth-slot distance h * the shrinkage ratio S; the adhesive application region of the yoke portion and the adhesive application region of the tooth portion together constitute the adhesive application region on the stator lamination capable of receiving adhesive; and on the closed plane of the stator lamination, regions other than the adhesive application region are non-adhesive application regions; in step S4, the preparation of the mesh gluing plate comprises: first applying, onto the mesh base, a liquid material capable of being cured under light irradiation or thermal radiation; then covering the liquid material with the photosensitive film, and curing the liquid material by photosensing, exposure, or thermal radiation; cured liquid material blocking corresponding meshes of the mesh base to form adhesive-blocking regions that are incapable of allowing adhesive to pass therethrough, the adhesive-blocking regions corresponding to the non-adhesive application regions on the stator lamination; and finally removing uncured liquid material from the mesh base such that unblocked meshes form adhesive-permeable regions capable of allowing adhesive to pass therethrough, the adhesive-permeable regions corresponding to the adhesive application regions on the stator lamination, whereby the mesh gluing plate is formed after the adhesive-permeable regions and the adhesive-blocking regions are produced on the mesh base.

2. The gluing method for stator laminations of motors according to claim 1, wherein, before drawing the adhesive application region in step S1, the method further comprises calculating a shrinkage ratio S of the adhesive according to a viscosity of the selected adhesive and a mesh count of the mesh base, and wherein the shrinkage ratio S is proportional to the mesh count of the mesh base and the viscosity of the adhesive.

3. The gluing method for stator laminations of motors according to claim 2, wherein, under a condition that a product of the mesh count of the selected mesh base and the viscosity of the adhesive is greater than 160,000, the shrinkage ratio S is calculated as follows:

$$\text{shrinkage ratio S} = [100 - \frac{\text{mesh count of the selected mesh base}}{500} \times \frac{\text{adhesive viscosity}}{10000}] \div 4 \times 1\%$$

.

4. The adhesive applying method for motor stator lamination according to claim 2, wherein, under a condition that a product of the mesh count of the selected mesh base and the viscosity of the adhesive is less than or equal to 160,000, the shrinkage ratio S is calculated as follows:

$$\text{shrinkage ratio } S = [100 - \frac{\text{mesh count of the selected mesh base}}{500} \times \frac{\text{adhesive viscosity}}{10000}]$$
$$\div \frac{\text{adhesive viscosity} \times \text{mesh count of the selected mesh base}}{40000}] \times 1\%$$

5. The gluing method for stator laminations of motors according to any one of claims 1 to 4, wherein, in step S2, a preparation method of the photosensitive film comprises:
forming light-permeable and heat-permeable regions and mask regions on a substrate of the photosensitive film, wherein shapes of the light-permeable and heat-permeable regions correspond to the non-adhesive application regions drawn in step S1, and shapes of the mask regions correspond to the adhesive application regions drawn in step S1.

6. The gluing method for stator laminations of motors according to any one of claims 1 to 5, wherein, in step S4, after curing the liquid material, the mesh gluing plate forms adhesive-blocking regions and adhesive-permeable regions, wherein shapes of the adhesive-blocking regions correspond to the non-adhesive application regions drawn in step S1, and shapes of the adhesive-permeable regions correspond to the adhesive application regions drawn in step S1.

7. A stator core for motor, wherein the stator core is prepared by laminating and bonding stator laminations using the gluing method for stator lamination according to any one of claims 1 to 6.

8. A for applying adhesive to motor stator lamination, wherein the mesh gluing plate comprises adhesive-blocking regions and adhesive-permeable regions, the adhesive-blocking regions being formed by applying a liquid material and blocking meshes under light curing or thermal curing, wherein shapes of the adhesive-blocking regions correspond to non-adhesive application regions of the stator lamination, and shapes of the adhesive-permeable regions correspond to adhesive application regions of the stator lamination.

9. A method for preparing a mesh gluing plate for applying adhesive to motor stator lamination, wherein the method comprises:

applying, onto a mesh base, a liquid material capable of being cured under light irradiation or thermal radiation; covering the liquid material with a photosensitive film having dimensions corresponding to those of the stator lamination, such that after curing, the liquid material blocks corresponding meshes of the mesh base to form adhesive-blocking regions that are incapable of allowing adhesive to pass therethrough, wherein shapes of the adhesive-blocking regions correspond to non-adhesive application regions on the stator lamination; and removing uncured liquid material from the mesh base, such that unblocked meshes form adhesive-permeable regions capable of allowing adhesive to pass therethrough, wherein shapes of the adhesive-permeable regions correspond to adhesive application regions on the stator lamination.

10. The method for preparing a mesh gluing plate for applying adhesive to motor stator lamination according to claim 9, wherein the photosensitive film comprises light-permeable and heat-permeable regions and mask regions, wherein shapes of the light-permeable and heat-permeable regions correspond to non-adhesive application regions of the stator lamination, and shapes of the mask regions correspond to adhesive application regions of the stator lamination.

FIG. 1

FIG. 2

FIG. 3

FIG. 4

S=20%

$\triangle d$  $\triangle D$

1

$\triangle h$

21

22

FIG. 5

FIG. 6

S=24%

FIG. 7

FIG. 8

S=39.99%   △d   △D   1

△h   21   22

FIG. 9

Fig. 10

S=22.25%

FIG. 11

FIG. 12

## INTERNATIONAL SEARCH REPORT

| | International application No. |
|---|---|
| | **PCT/CN2024/091819** |

| A. | CLASSIFICATION OF SUBJECT MATTER |
|---|---|

H01F3/02(2006.01)i; H02K15/12(2006.01)i; B41C1/14(2006.01)i; B21D28/02(2006.01)i; H02K3/38(2006.01)i; H02K15/02(2006.01)i

According to International Patent Classification (IPC) or to both national classification and IPC

| B. | FIELDS SEARCHED |
|---|---|

Minimum documentation searched (classification system followed by classification symbols)

    IPC: H02K B41C H01F B21D

Documentation searched other than minimum documentation to the extent that such documents are included in the fields searched

Electronic data base consulted during the international search (name of data base and, where practicable, search terms used)

    CNTXT, ENTXT, WPABS, CJFD: 电机, 电动机, 马达, 定子, 转子, 铁芯, 胶, 黏, 粘, 贴, 版, 丝网, 镂空, 透, 漏, 孔, 固化, 光, 热, 收缩, 印刷, motor, electronic machine, stator, rotor, core, glue, paste, bond, screen, hollowe, through, leek, hole, Curing, dry, light, heat, contraction, print

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116742910 A (SUZHOU SHOULIDE TECHNOLOGY CO., LTD.) 12 September 2023 (2023-09-12)<br>    description, paragraphs [0025]-[0040] | 1-10 |
| Y | CN 215704880 U (QUFU YUQIAOFU TECHNOLOGY CO., LTD.) 01 February 2022 (2022-02-01)<br>    description, paragraph [0002] | 8-10 |
| Y | CN 110429772 A (DMT INTELLIGENT EQUIPMENT TECHNOLOGY CO., LTD.) 08 November 2019 (2019-11-08)<br>    description, paragraph [0022], and figure 2 | 8-10 |
| Y | CN 115771331 A (CHANGZHOU PLET PRINTING TECHNOLOGY CO., LTD.) 10 March 2023 (2023-03-10)<br>    description, paragraphs [0003]-[0006] | 8-10 |
| Y | EP 1902452 A1 (CENTRE NATIONAL D'ETUDES SPATIALES et al.) 26 March 2008 (2008-03-26)<br>    description, paragraphs [0035]-[0054], and figure 1 | 8-10 |

| ✓ | Further documents are listed in the continuation of Box C. | ✓ | See patent family annex. |
|---|---|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 June 2024** | **18 July 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| | International application No. |
|---|---|
| | **PCT/CN2024/091819** |

**C. DOCUMENTS CONSIDERED TO BE RELEVANT**

| Category* | Citation of document, with indication, where appropriate, of the relevant passages | Relevant to claim No. |
|---|---|---|
| A | JP 2022001014 A (NIPPON STEEL CORP.) 04 January 2022 (2022-01-04)<br>entire document | 1-10 |
| A | JP H09322456 A (SHINKO CHEMICAL CO., LTD. et al.) 12 December 1997 (1997-12-12)<br>entire document | 1-10 |

Form PCT/ISA/210 (second sheet) (July 2022)

**INTERNATIONAL SEARCH REPORT**
**Information on patent family members**

International application No.

**PCT/CN2024/091819**

| Patent document cited in search report | | | Publication date (day/month/year) | Patent family member(s) | | | Publication date (day/month/year) |
|---|---|---|---|---|---|---|---|
| CN | 116742910 | A | 12 September 2023 | CN | 116742910 | B | 17 November 2023 |
| CN | 215704880 | U | 01 February 2022 | | None | | |
| CN | 110429772 | A | 08 November 2019 | CN | 110429772 | B | 28 May 2021 |
| CN | 115771331 | A | 10 March 2023 | | None | | |
| EP | 1902452 | A1 | 26 March 2008 | ES | 2378047 | T3 | 04 April 2012 |
| | | | | EP | 1902452 | B1 | 10 August 2011 |
| | | | | FR | 2888390 | A1 | 12 January 2007 |
| | | | | WO | 2007006965 | A1 | 18 January 2007 |
| JP | 2022001014 | A | 04 January 2022 | | None | | |
| JP | H09322456 | A | 12 December 1997 | JP | 3689492 | B2 | 31 August 2005 |

Form PCT/ISA/210 (patent family annex) (July 2022)